Europäisches Patentamt

European Patent Office

Office européen des brevets

(19)

(11) Publication number: **0 015 600**
**A1**

(12) # EUROPEAN PATENT APPLICATION

(21) Application number: **80200125.5**

(22) Date of filing: **14.02.80**

(51) Int. Cl.³: **F 16 K 3/08**

(30) Priority: **23.02.79 IT 3481379 U**

(43) Date of publication of application: **17.09.80**
**Bulletin 80/19**

(84) Designated Contracting States: **BE CH DE FR GB LU NL SE**

(71) Applicant: **MINGORI DIFFUSION S.r.l., 4, Via S. Pietro Martire, I-42100 Reggio Emilia (IT)**

(72) Inventor: **Mingori, Claudio, 10, Via Carducci, I-42041 Brescello (Reggio Emilia) (IT)**

(74) Representative: **Corradini, Corrado, 4, Via Sessi, I-42100 Reggio Emilia (IT)**

(54) **Cock of improved type.**

(57)  Improved cock consisting of a hollow body (1) for connection to a normal water main, a delivery nozzle (2) branching from said hollow body (1), and a valve seat disposed transversely to this latter, comprises a pack-type valve unit in which, into a cartridge or cup (14), two ceramic discs (12, 13) and a disc member (11) rigid with the inner end of an operating rod (4), are inserted; the first ceramic disc (13) being torsionally engaged with the base wall of the cartridge (14), and the second ceramic disc (12) being torsionally engaged with the disc member (11), by means of two pairs of diametrically opposing cylindrical stems (19, 20) branching from the base wall of the cartridge (14) and from the disc member (11), and which are inserted into suitable recesses provided in the corresponding ceramic discs (12, 13).

ACTORUM AG

- 1 -

## Cock of improved type

This patent relates to an improved cock, which is especially designed to enable its operational state and/or the state of its seal to be kept in proper condition, without it being necessary to carry out complicated repair operations, or to dismantle it and replace it completely.

Suitable cocks are used for delivering water from the normal water mains. These include, among others, cocks constituted essentially by a hollow body provided with a suitable valve seat and intended for connection to the water main; an operating rod inserted into said hollow body and fitted at its ends with a handle and valve element; and a delivery mouth connected to this body downstream of its valve seat. Usually, said valve element comprises a disc, rigid with the operating rod, and fitted with a seal ring or gasket which, when the cock is in its closed position, rests against the valve seat of the hollow body.

However, although cocks of the aforesaid known type continue to be widely used, they have certain drawbacks which are described hereinafter.

A first serious drawback of cocks of the aforesaid type derives from the long, complicated and costly operations necessary to restore the sealing state of such cocks to its proper condition once their valve seat has been worn due to the passage and leakage of liquid.

These operations require the replacement of the seal ring, and the grinding down of the valve seat, this having to be carried out manually with a suitable tool.

Moreover, this operation is either not always possible, or at most can be carried out only once or twice, after which the complete cock must be replaced.

This replacement involves a great deal of bother, in particular if the cock is embedded, as in the case of water closets or direct water discharge points for lavatory bowls. In such cases, the wall and any surrounding tiles must be broken away, the cock replaced and finally said wall and tiles made good.

Further drawbacks of these types of cock derive from the fact that the thread between the operating rod and the hollow body can become easily damaged due to the frequent operation and continuous presence of moisture.

The object of the present patent is to provide a cock of improved type, in which the aforesaid drawbacks are obviated by a constructionally simple, rational, functional and highly reliable design.

According to the invention, the cock provided is of the type comprising a hollow body for connection to the water main, an operating rod mounted rotatably inside the hollow body, and a delivery nozzle branching from said hollow body, wherein on the inner end of this rod, which is constructed of plastics material, there is disposed a pack of discoidal members partly intended for sealing purposes and partly intended for adjusting the liquid flow rate, and which form a cartridge which is gripped by the operating rod and is pressed against the valve seat of the hollow body by a spring mounted on said operating rod.

This latter is advantageously mounted rotatably relative to a guide plug which closes the outer mouth of the hollow body. Finally, the discoidal members which constitute said pack are individually provided with convenient passages which become aligned to a greater or lesser extent according to the angular position of the rod, and with suitable appendices in order to connect them torsionally to the rod and to the hollow body of the cock.

The objects and advantages of the invention, together with its characteristics and constructional merits will be more apparent from the detailed description given hereinafter with reference to the accompanying drawings in which:
- FIGURE 1 is a longitudinal section through the cock according to the invention in its open position;
- FIGURE 2 is a longitudinal section through the valve unit of the invention in its closed position;
- FIGURE 3 is an exploded perspective view of the elements which comprise the valve unit of the cock according to the invention;

- FIGURE 4 is a perspective longitudinal cut-away view of the cartridge or capsule which contains the valve unit of the invention.

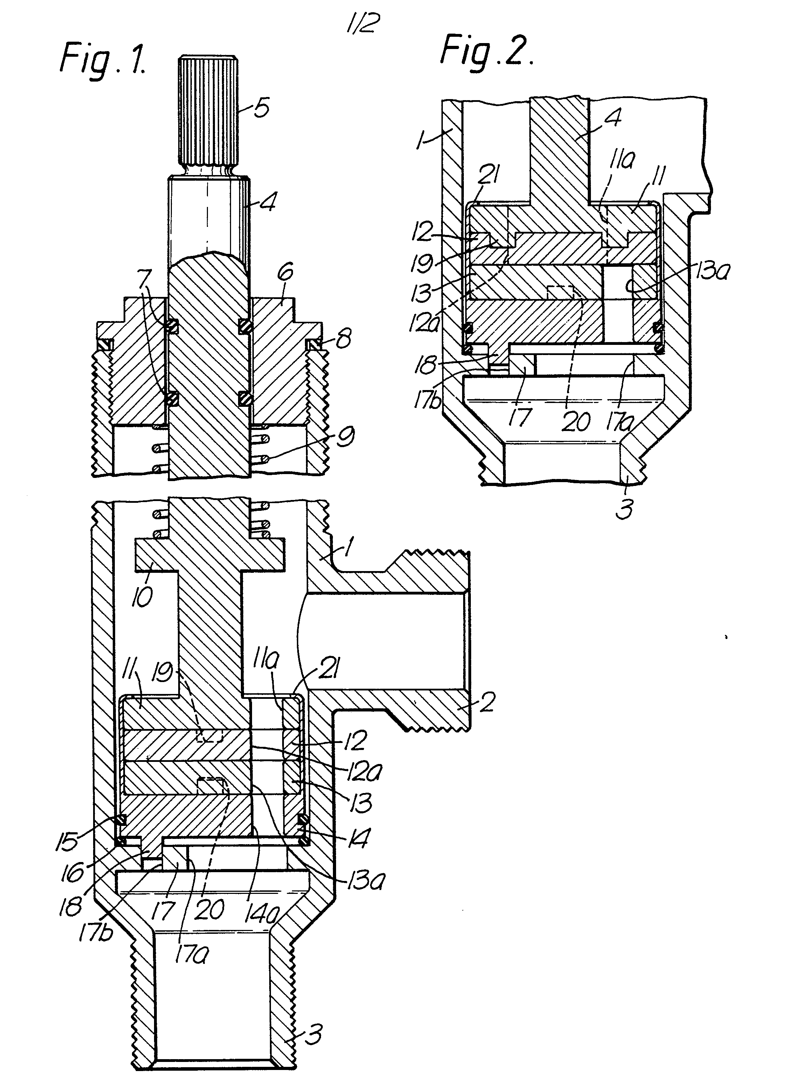

From said figures, and in particular from Figures 1 and 2, it can be seen that the cock according to the invention comprises a hollow body 1 which is provided at one end with a threaded stem 3 for connection to a normal water main. In proximity to the threaded stem 3, the hollow member 1 is provided internally with a baffle 17 comprising a passage 17a. The baffle 17 is further provided with a through bore 17b into which is inserted a cylindrical stem 18 branching from the outer surface of the base wall of a cartridge or cup 14.

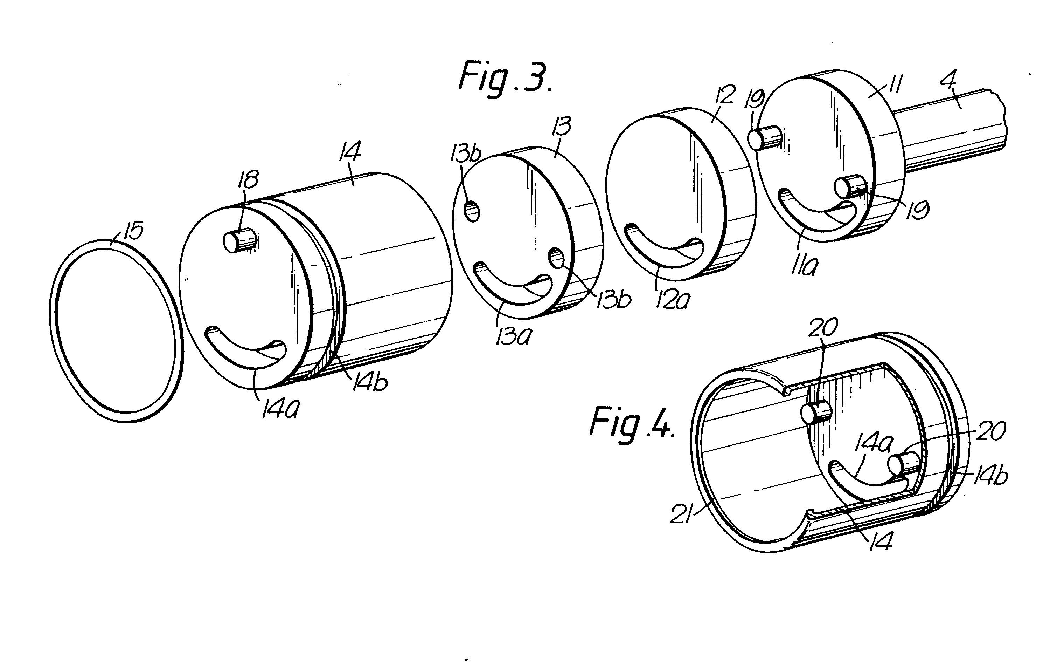

As can be seen, between this latter and the baffle 17 there is a seal ring or gasket 16. As shown in Figures 3 and 4, the outer cylindrical surface of the base wall of the cartridge 14 comprises a circumferential groove 14b for receiving a seal ring or gasket 15 for sealing against the inner cylindrical wall of the hollow body 1.

The said cartridge 14, of plastics construction, is provided at its base wall with an arcuate slot 14a which is in continuous communication via the passage 17a of the baffle 17 with the threaded stem 3 of the cock. Into the cartridge 14 there is inserted a first ceramic disc 13 provided with an arcuate slot 13a the extension and width of which substantially coincides with the arcuate slot 14a in the cartridge 14, and is aligned with said arcuate slot 14a. As shown in Figure 4, two diametrically opposing cylindrical stems 20 branch from the inner face

- 5 -

0015600

of the base wall of the cartridge 14, and are inserted into two recesses 13b provided in the first ceramic disc 13.

Against this latter there rests a second ceramic disc 12 which is also housed inside the cartridge 14, and is provided with an arcuate slot 12a having an extension and width which practically coincide with those of said arcuate slots 13a and 14a. In that transverse face of the second ceramic disc 12 which faces the mouth of the cartridge 14, there are provided two suitable diametrically opposing recesses into which there are inserted two cylindrical stems 19 branching from a disc 11 which is also inserted into the cartridge 14.

It should be noted that the two discs 12 and 13 do not necessarily have to be constructed of ceramic material, and instead can be constructed of any other equivalent material. Said disc 11, which is rigid with the inner end of an operating rod 4 inserted into the hollow body 1, is provided with an arcuate slot 11a having an extension and width which substantially coincide with those of the arcuate slots 12a, 13a and 14a. The arcuate slot 11a is constantly aligned with the arcuate slot 12a. The discoidal members 13, 12 and 11 constitute a pack which is contained inside the cartridge 14 which grips the disc 11 by means of a circumferential lip 21 which is bent over the disc 11 so as to ensure that said discoidal members are kept in the form of a pack.

A delivery nozzle 2 branches from the hollow body 1 slightly downstream of this valve unit. Beyond the delivery nozzle, the operating rod 4 is provided with a circumferential shoulder 10, against which there rests one end of a compression spring 9 which is mounted on the operating rod 4, its

0015600

other end resting against the inner face of a plug which closes the hollow body 1 and acts as a guide for the operating rod 4.

As shown in Figure 1, the operating rod 4 is mounted rotatably relative to the guide plug 6 and emerges from it. At its free end, the operating rod 4 is provided with a normal grooved stem 5 for receiving a normal operating handle.

Finally, a gasket 8 is provided between the guide plug 6 and hollow body 1, and a pair of seal rings 7 are provided between the guide plug 6 and operating rod 4. The control rod 4 is of plastics construction, whereas the guide plug 6 and hollow body 1 are constructed of metal, normally brass.

It will be noted that the seal between the base wall of the cartridge 14 and the baffle 17 is provided by the seal gasket 16, whatever the operating position of the cock according to the invention, with the aid of the force exerted by the spring 9, which constantly compresses the gasket 16 so as to also oppose the pressure of the upstream water.

The lateral seal between the cartridge 14 and inner cylindrical wall of the hollow body 1 is provided by the seal ring or gasket 15.

As shown in Figure 2, the seal between the two ceramic discs 12 and 13 when the cock is in its closed position is provided by the perfect flatness of the two contacting transverse surfaces of the discs 12 and 15, and the force exerted by the compression spring 9. This latter also ensure that the cylindrical stem 18 of the cartridge 14 remains continuously inserted in the through bore 17b provided in the baffle 17 of the hollow body 1.

Starting from the closed position shown in Figure 2, water is delivered and its flow rate adjusted by suitably rotating the operating rod 4 so that the pair of constantly aligned arcuate slots 11a and 12a become aligned to a greater or lesser extent with the pair of constantly aligned arcuate slots 13a and 14a. In this respect, the disc 11 and ceramic disc 12 rotate rigidly inside the cartridge 14 by virtue of the torsional engagement provided by the pair of cylindrical stems 19.

During rotation of the operating rod 4, the cartridge 14 and ceramic disc 13 remain stationary due to the presence of the torsional engagement provided by the stems 18 and 20. If the necessary seal between the operating rod 4 and the guide plug 6, or between this latter and the hollow body 1 should no longer exist, the sealing state can be restored to its proper condition without special difficulty, by merely replacing the seal rings 7 or seal gasket 8. Should the necessary seal between the cartridge 14 and hollow body 1 no longer exist, it is necessary only to replace the pair of seal rings or gaskets 15 and 16, which is a very simple operation.

Finally, if the necessary seal between the pair of ceramic discs 12 and 13 should no longer exist, the valve unit together with the operating disc 4 is

0015600

completely replaced. This replacement, which is extremely simple, again requires no repair operation, and can be carried out by anybody as the unit is easily obtainable commercially, and is not costly as the rod 4 and cartridge 14 are of plastics construction.

What we claim is:

1. An improved cock as heretofore described, of the type comprising a hollow body for connection to a normal water main, a delivery nozzle branching from said hollow body, and a valve seat disposed transversely to this latter, comprising a pack-type valve unit which is continuously pressed against said valve seat and constrained torsionally thereto, and provided with apertures which become aligned with each other to a greater or lesser extent depending on the angular position of an operating rod mounted rotatably relative to the hollow body, and having its inner end coupled to said valve unit.

2. An improved cock as claimed in claim 1, wherein said pack-type valve unit comprises, starting from said valve seat, a cartridge or cup into which are inserted two ceramic discs and a disc member rigid with the inner end of the operating rod, the first of said ceramic discs being torsionally engaged with the base wall of the cartridge, and the second ceramic disc being torsionally engaged with the disc member, by means of two pairs of diametrically opposing cylindrical stems branching from the base wall of the cartridge and from the disc member, and which are inserted into suitable recesses provided in the corresponding ceramic discs.

3. An improved cock as claimed in claim 1, wherein the torsional constraint between the pack-type valve unit and the valve seat of the hollow body is provided by an outer cylindrical stem branching from the base wall of the cartridge and inserted into a through bore provided in said valve seat.

4. An improved cock as claimed in claim 1, wherein the apertures in the pack-type valve unit comprise four analogous arcuate slots, which are constantly aligned in pairs whatever the angular position of the operating rod.

5. An improved cock as claimed in claim 1, wherein the coupling between the pack-type valve unit and the inner end of the operating rod is provided by a circumferential lip on the cartridge which is bent over onto said disc member; said cartridge being constructed of a suitable plastics material.

6. An improved cock as claimed in claim 1, wherein said operating rod, constructed of a suitable plastics material, emerges freely from the hollow body by way of a guide plug, and has mounted on it a compression spring, the opposing ends of which rest against the inner transverse wall of said plug and against a circumferential rib on the rod respectively; said rib being in proximity to the disc member, suitable seal gaskets or rings being disposed between the operating rod and the guide plug.

7. An improved cock as claimed in claim 1, wherein suitable seal gaskets are disposed between the outer transverse face of the base wall of the cartridge and the valve seat of the hollow body, and between the outer cylindrical surface of the cartridge and the inner cylindrical wall of the hollow body.

8. An improved cock as heretofore described and illustrated in the accompanying drawings, and for the objects herein specified.

0015600

Fig.1.

Fig.2.

Fig. 3.

Fig. 4.

2/2

0015600

European Patent
Office

**EUROPEAN SEARCH REPORT**

0015600
Application number

EP 80 20 0125

| Category | Citation of document with indication, where appropriate, of relevant passages | Relevant to claim | CLASSIFICATION OF THE APPLICATION (Int. Cl.³) |
|---|---|---|---|
| | US - A - 3 780 758 (R.W. DEVRIES) <br> * fig. 1, 3 * <br> -- | 1-3, <br> 6,7 | F 16 K 3/08 |
| | DE - B - 1 303 204 (WILLIS) <br> * fig. 1 * <br> -- | 1,2, <br> 4,6, <br> 7 | |
| | US - A - 3 831 621 (R. C. ANTHONY <br> et al.) <br> * fig. 1 to 4 * <br> -- | 1,2, <br> 5,7 | **TECHNICAL FIELDS SEARCHED (Int.Cl.³)** |
| | US - A - 2 696 219 (L.S. BARKSDALE) <br> * fig. 2, 6 * <br> -- | 2 | |
| A | CH - A5 - 574 067 (AMERICAN STANDARD) <br> * complete document * <br> -- | | F 16 K 3/00 <br> F 16 K 11/00 <br> F 16 K 19/00 |
| A | FR - A - 2 180 744 (AMERICAN STANDARD) <br> * complete document * <br> -- | | |
| A | US - A - 3 683 965 (J.H. McCLURE et al.) <br> * complete document * <br> -- | | **CATEGORY OF CITED DOCUMENTS** |
| A | DE - B - 1 206 684 (ROKAL) <br> * complete document * <br> -- | | X: particularly relevant <br> A: technological background <br> O: non-written disclosure <br> P: intermediate document <br> T: theory or principle underlying the invention |
| A | US - A - 1 990 423 (B. BOHNENBLUST) <br> * complete document * <br> ---- | | E: conflicting application <br> D: document cited in the application <br> L: citation for other reasons |
| | | | &: member of the same patent family, corresponding document |

X The present search report has been drawn up for all claims

| Place of search | Date of completion of the search | Examiner |
|---|---|---|
| Berlin | 08-05-1980 | SCHLABBACH |

EPO Form 1503.1  06.78